# EUROPÄISCHE PATENTSCHRIFT

(11) **EP 2 029 720 B1**
(45) Veröffentlichungstag und Bekanntmachung des Hinweises auf die Patenterteilung: **18.11.2009**
(21) Anmeldenummer: 06790935.8
(22) Anmeldetag: 09.10.2006
(51) Int. Cl.: C12C 7/04, C12C 7/01, C12C 1/02, C12C 1/16

(54) **VERFAHREN ZUR GANZKORNKONDITIONIERUNG VON ZUR BIERBEREITUNG EINGESETZTEM BRAUGETREIDE**
PROCESS FOR WHOLE-GRAIN CONDITIONING OF BREWING CEREALS USED IN BREWING BEER
PROCÉDÉ DE CONDITIONNEMENT DES GRAINS ENTIERS DE CÉRÉALES DE BRASSERIE DESTINÉES À LA PRODUCTION DE BIÈRE

(30) Priorität: 09.06.2006 DE 102006021777
(43) Veröffentlichungstag der Anmeldung: 04.03.2009
(73) Patentinhaber: Bühler AG, 9240 Uzwil (CH)
(72) Erfinder: GEHRIG, Klaus, 71711 Steinheim-Höpfigheim (DE); MENGER, Hans-Jörg, 68799 Reilingen (DE); KELLER, Urs, CH-8472 Seuzach (CH)
(74) Vertreter: Wilming, Martin
(86) Internationale Anmeldenummer: PCT/CH2006/000552
(87) Internationale Veröffentlichungsnummer: WO 2007/140630

(56) Entgegenhaltungen:
- DE-B1- 2 844 827
- DE-C- 440 481
- DE-C1- 19 740 209
- DE-U- 7 106 561
- GB-A- 1 403 391
- GB-A- 2 009 586

## Beschreibung

Die Erfindung betrifft ein Verfahren zur Ganzkomkonditionierung, insbesondere von Braugetreide, wie z.B. von Gerstenmalz und die Verarbeitung dieses ganzkomkonditinierten Getreides in der Brautechnologie.

Braugetreide wird vor der weiteren Verarbeitung im Brauprozess mechanisch zerkleinert, z.B. durch Schrotung mit Walzen-, Hammer- oder Korrundscheibenmühlen oder Rotor-Stator Systemen. Bei Einsatz von Walzenmühlen ist zur Verbesserung des Mahlergebnisses eine Auffeuchtung des Braugetreides durch Konditionierschnecken um max. 2% Wassergehalt ebenfalls Stand der Technik, bei sogenannten Weichkonditionierungsmühlen wird ein Wasseranteil von bis zu 16% in einem sogenannten Weichschacht dem Malz zugeführt. Bei beiden Systemen liegt die Verweilzeit des Malzes in der Befeuchtungszone im Bereich von ca. 60 sec. Diese Verweilzeit reicht nicht aus, damit das Wasser vollständig vom Malz aufgenommen werden kann und zumindest ein Teil des zugeführten Wassers haftet noch in freier Form an der Spelze an. Bedingt durch diese kurze Verweilzeit, sowie die natürlich bedingte ungleichen Korngrössen des Getreides, ist eine homogene Wasseraufnahme innerhalb der Charge nicht gewährleistet.

Mit steigendem Anteil an zugeführtem Wasser erhöht sich die Gefahr, dass die Walzen der Mühlen verkleben und oder hygienische Probleme entstehen.

Im nachfolgenden Maischprozess findet die enzymatische Umwandlung wasserunlöslicher, hochmolekularer Inhaltsstoffe wie von Stärke und Proteinen in niedermolekulare, wasserlösliche Substanzen, z.B. in Zucker und Aminosäuren statt. Um diese aus den Getreidekörnern umzuwandeln und zu extrahieren bzw. muss der mechanische Aufschluss des Braugetreides in ausreichender Form erfolgt sein.

Die gewonnene Lösung (Maische) wird während des nachfolgenden Läuterprozesses in die flüssige Phase (Würze) und in die Feststoffe (Treber) getrennt.

Zur Fest-/Flüssigtrennung werden in der Brautechnologie im Allgemeinen der Läuterbottich oder der Maischefilter verwendet.

In Läuterbottichen bilden die festen, nicht wasserlöslichen Teile des Getreidekoms, die Spelzen eine Filterschicht, durch welche die Flüssigkeit (Würze) nach unten abgezogen und filtriert wird. Werden die Spelzen und Keimlinge während der Schrotung aufgrund mangelnder Elastizität zu stark zerkleinert, erfolgt zum einen eine vermehrte Lösung können unerwünschten Inhaltsstoffe wie Polyphenole, Lipide usw. in die Würze gelangen und weiterhin erfolgt eine deutlich negative Beeinflussung des Aufbaues der Filterschicht mit der Folge einer verlangsamten Abläuterung der Würze.

Im Maischefilter ist der Einfluss vollständig erhaltener Spelzen in Bezug auf die Läutergeschwindigkeit, infolge der geringeren Höhe der Filterschicht, von geringerer Bedeutung.

In der DE-A-4440481 wurde daher vorgeschlagen das Malz zunächst zu befeuchten, anschliessend einer Druckbehandlung im Mahlspalt zu unterziehen, sowie Spelzen und Mehlkörper durch Siebung zu trennen. Die verwendete Schrotmühle weist hierzu mindestens ein Sieb auf. Die abgetrennten Spelzen werden nachfolgend einer Prallbehandlung unterzogen um anhaftenden Extrakt noch entfernen zu können.

Durch das Prallen kann nicht nur ein Gewinn an Extrakt erfolgen, sondern es steigt auch das Volumen der Spelzenfraktion. Dieser erhöhte Anteil erzeugt im Läuterbottich ein optimiertes Filterbett welches wiederum eine verbesserte Abläuterung sicherstellt oder im Umkehrschluss ist es möglich einen geringeren Anteil der Spelzen als Filtermaterial zu verwenden, wodurch ein möglicher Eintrag von Polyphenolen reduziert wird.

Bekannt sind weiterhin eine Schrotmühle für Malz mit einer laufenden Schrotvermessung (DE-A-10218424), eine Nassschrotung (DE-A-10255504 u.a.), eine gekapselte, luftfreie Schrotung (DE-A-19740036) oder eine Extrusion von Malzschrot (DE-A-3212390).

De 2 844 827 B1 Offenbart eine Vorrichtung zum weichen von Braumaterialien.

Der Erfindung liegt die Aufgabe zugrunde, ein Verfahren zur Ganzkornkonditionierung von zur Bierbereitung eingesetztem Braugetreide zu entwickeln um die Qualität der Auffeuchtung von Braugetreide, als Vorbereitung für den Schrotprozess, so zu verbessern, dass durch eine homogene Auffeuchtung jedes einzelnen Korns auf bis zu 20% Wassergehalt, ohne freies Oberflächenwasser, bei einer sehr guten Mürbigkeit des Mehlkörpers gleichzeitig die Elastizität von Spelzen und Blattkeim derart erhöht wird, dass Spelzen und Blattkeim nahezu ohne mechanische Beschädigung aus dem Schrotprozess hervorgehen und dadurch die nachfolgenden Schritte im Brauprozess, das Maischen, das Läutern, die Würzekochung und die Vergärung mit optimalen Rohstoff und Prozessparametem gestaltet werden können.

Die Bauschigkeit des nach dem erfindungsgemässen Verfahren hergestellten Schrotes ermöglicht bei dem Verfahrensschritt der Fest-/Flüssigtrennung um ca. 10 bis 15 % höhere Volumenströme im Vergleich zu Schrot, welches nach dem beschriebenen Stand der Technik hergestellt wurde, was gleichbedeutend mit kürzeren Zykluszeiten ist. Ein weiterer technologischer Vorteil ergibt sich durch die hohe Anzahl der ganz erhaltenen Keimlinge und somit ggf. ganz separierbaren Keimlinge, da aus diesen die für den Brauprozess schädlichen Inhaltsstoffen der Keimlinge wie Lipide u.a. in der Maische weniger extrahierbar sind.

Möchte man die Extraktion dieser unerwünschten Inhaltsstoffe vollständig ausschliessen, ermöglicht der hohe Anteil ganzer Keimlinge ein Fraktionieren des Schrotes in Spelzen, Keimlinge und Mehlkörper durch bekannte mechanische Verfahrenstechniken, wobei die Spelzen zu einem späteren Zeitpunkt wieder dem Prozess vollständig oder anteilig zugeführt werden können. Wird das unfraktionierte Schrot eingemaischt, so ist zum Zeitpunkt des Einmaischens bereits zu beobachten, dass die als ganzes erhaltenen Keimlinge als Deckschicht auf der Maische schwimmen und dort separiert werden können.

Ein weiterer verfahrenstechnischer Vorteil durch die optimierte homogene Auffeuchtung des Mehlkörpers ist eine forcierte Reaktionskinetik bei den enzymatischen Stoffumwandlungen während des Maischprozesses.

Gelöst wird diese Aufgabe durch ein Verfahren mit den Merkmalen nach Anspruch 1. Die Unteransprüche geben vorteilhafte Ausgestaltungen des Verfahrens an. Die erfindungsgemässe Auffeuchtung des Braugetreides erfolgt vorteilhaft zweistufig durch ein Vometzen mit geringen Wassermengen von 1 - 3%, einem nachfolgenden Abstehen, anschliessendem zweiten Netzen und einem zweiten Abstehen auf die gewünschte Endfeuchte. Durch das Vornetzen und das Abstehen wird erreicht, dass die gesamte Wassermenge von der Spelze aufgenommen wird und deren Permeabilität im Hinblick auf die zweite Netzung entscheidend gesteigert wird. Dadurch können beim zweiten Netzen die für die erforderliche Mürbigkeit des Mehlkörpers sowie der erforderlichen Elastizität von Spelz und Keimling notwendigen Wassermengen sehr schnell vom Korn aufgenommen werden, so dass kein, den Prozess negativ beeinflussendes, freies Oberflächenwasser verbleibt.

Möglich ist auch eine Auffeuchtung der Getreidekörner über eine Luftauffeuchtung, d.h. mittels variierbarer relativer Luftfeuchtigkeit, wobei die relative (Anfangs)feuchte der Luft mindestens 95% betragen sollte.

Das so optimal für den mechanischen Zerkleinerungsprozess vorbereitete Braugetreide wird anschliessend einer mechanischen Zerkleinerung zugeführt. Dies kann über die in der Brautechnologie als Stand der Technik bekannten Mühlen erfolgen, wobei das ganzkom-konditionierte Braugetreide sowohl trocken als auch nass vermahlen werden kann.

Das nach dem erfindungsgemässen Verfahren aufgefeuchtete Braugetreide kann jedoch auch über speziell an die Anforderungen dieses Malzes angepasste Trockenschrotmühlen mit hohen Durchsatzleistungen In-line geschrotet und eingemaischt werden

Ein zusätzlicher Vorteil des erfindungsgemässen Verfahrens besteht bei der Vermahlung des ganzkornkonditionierten Malzes im Bereich des Explosionsschutzes dahingehend, dass der Auffeuchtegrad des Malzes das Risiko einer Staubexplosion deutlich reduziert und somit die Walzenstühle der Brotgetreidemühlen eingesetzt werden können.

Im Ergebnis soll eine Erhöhung der Sudzahl auf ca. 20 erreicht werden.

## Patentansprüche

1. Verfahren zur Ganzkomkondftionierung von zur Bierbereitung eingesetztem Braugetreide, wie von nativem oder von gemälztem Braugetreide, insbesondere von Gerstenmalz durch homogenes Auffeuchten der Getreidekörner auf bis zu 20% effektiven Feuchtegehalt und ein anschliessendes Abstehen sowie eine nachfolgende Trocken- und/oder Nassvermahtung des ganzkomkonditionierten Braugetreides, **dadurch gekennzeichnet, dass** ein Netzen und Abstehen zweistufig erfolgt.

2. Verfahren nach Anspruch 1. **dadurch gekennzeichnet, dass** das Braugetreide vor dem Netzen geschält wird.

3. Verfahren nach Anspruch 1 oder 2, **dadurch gekennzeichnet, dass** das homogen konditionierte Braugetreide zweifach ohne Zwischensichtung geschrotet wird.

4. Verfahren nach mindestens einem der Ansprüche 1 bis 3, **dadurch gekennzeichnet, dass** die Abstehzeit max, 30 Minuten je Stufe beträgt.

5. Verfahren nach Anspruch 1, **dadurch gekennzeichnet, dass** das Braugetreide langsam mittels feuchter Luft aufgefeuchtet wird, wobei die relative Luftfeuchtigkeit variierbar ist.

## Claims

1. Method for conditioning whole grains of brewer's grain used for beer preparation, such as of native or malted brewer's grain, in particular of barley malt by homogeneous moistening of the cereal grains up to 20% effective moisture content and subsequent standing and also subsequent dry and/or wet milling of the brewer's grain conditioned as whole grains, **characterized in that** wetting and standing proceed in two stages.

2. Method according to Claim 1, **characterized in that** the brewer's grain is hulled before wetting.

3. Method according to Claim 1 or 2, **characterized in that** the homogeneously conditioned brewer's grain is coarsely ground twice without intermediate sifting.

4. Method according to at least one of Claims 1 to 3, **characterized in that** the standing time is a maximum of 30 minutes per stage.

5. Method according to Claim 1, **characterized in that** the brewer's grain is moistened slowly by means of moist air, wherein the relative humidity is variable.

## Revendications

1. Procédé pour le conditionnement de grains entiers de céréale de brasserie utilisée dans la production de la bière, telle qu'une céréale native ou une céréale maltée, en particulier de malt d'orge, par humidification homogène des grains de céréales jusqu'à 20 % d'humidité effective et un repos subséquent ainsi qu'une mouture subséquente par voie sèche et/ou par voie humide de la céréale de brasserie conditionnée en grains entiers, **caractérisé en ce qu'**on effectue un mouillage et un repos en deux étapes.

2. Procédé selon la revendication 1, **caractérisé en ce que** la céréale de brasserie est décortiquée avant le mouillage.

3. Procédé selon la revendication 1 ou 2, **caractérisé en ce que** la céréale de brasserie conditionnée de façon homogène est concassée deux fois sans tamisage intermédiaire.

4. Procédé selon au moins l'une des revendications 1 à 3, **caractérisé en ce que** le temps de repos est d'au maximum 30 minutes par étape.

5. Procédé selon la revendication 1, **caractérisé en ce que** la céréale de brasserie est humidifiée à l'aide d'air humide, l'humidité relative de l'air étant variable.
